(19) Europäisches Patentamt
European Patent Office
Office européen des brevets

(11) **EP 3 547 490 B1**

(12) **FASCICULE DE BREVET EUROPEEN**

(45) Date de publication et mention
de la délivrance du brevet:
**11.11.2020 Bulletin 2020/46**

(51) Int Cl.:
*H02J 7/00* *(2006.01)*      *H02J 7/04* *(2006.01)*
*B60L 53/20* *(2019.01)*      *B60L 53/22* *(2019.01)*
*H02M 1/12* *(2006.01)*      *H02M 1/00* *(2006.01)*

(21) Numéro de dépôt: **19163377.5**

(22) Date de dépôt: **18.03.2019**

(54) **DISPOSITIF ET PROCÉDÉ DE CHARGE D'UNE BATTERIE ÉLECTRIQUE**

VORRICHTUNG UND VERFAHREN ZUM LADEN EINER ELEKTRISCHEN BATTERIE

DEVICE AND METHOD FOR CHARGING AN ELECTRICAL BATTERY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.03.2018 FR 1852645**

(43) Date de publication de la demande:
**02.10.2019 Bulletin 2019/40**

(73) Titulaire: **RENAULT s.a.s.**
**92100 Boulogne-Billancourt (FR)**

(72) Inventeurs:
• **GHITA, ion**
**75002 PARIS (FR)**
• **KVIESKA, Pedro**
**78000 VERSAILLES (FR)**
• **GODOY, Emmanuel**
**91370 Verrières le Buisson (FR)**
• **BEAUVOIS, Dominique**
**91190 Gif sur Yvette (FR)**

(56) Documents cités:
WO-A1-2016/016524    CN-A- 107 742 917
FR-A1- 3 025 367    KR-B1- 101 470 871
US-A1- 2016 268 916

**EP 3 547 490 B1**

**Description**

La présente invention concerne un dispositif de charge et un procédé de pilotage d'un tel dispositif, en particulier destiné à être utilisé dans un véhicule automobile à propulsion électrique ou hybride.

Dans des véhicules à propulsion électrique ou hybride, un groupe motopropulseur comporte une machine électrique alimentée par une batterie d'accumulation électrique. Dans certains de ces véhicules, il est prévu un dispositif de charge pouvant être raccordé au réseau électrique afin de recharger la batterie d'accumulation électrique entre deux utilisations du véhicule.

Le document WO2016016524 divulgue un dispositif et un procédé de charge d'une batterie d'accumulateurs dans lequel le courant de sortie d'un étage abaisseur de tension est régulé manière à réduire le contenu harmonique du courant délivré par le réseau d'alimentation électrique et ainsi optimiser le rendement de l'opération de charge de la batterie d'accumulateurs.

En vue de recharger la batterie d'accumulation électrique de son véhicule, un utilisateur peut souhaiter raccorder le dispositif de charge à un réseau électrique triphasé ou à un réseau électrique monophasé. À cet effet, il a été proposé des dispositifs de charge pouvant être raccordés à la fois au réseau triphasé et au réseau monophasé. Le document WO 2012/140 374 donne un exemple d'un tel dispositif de charge destiné à être utilisé dans un véhicule à propulsion électrique.

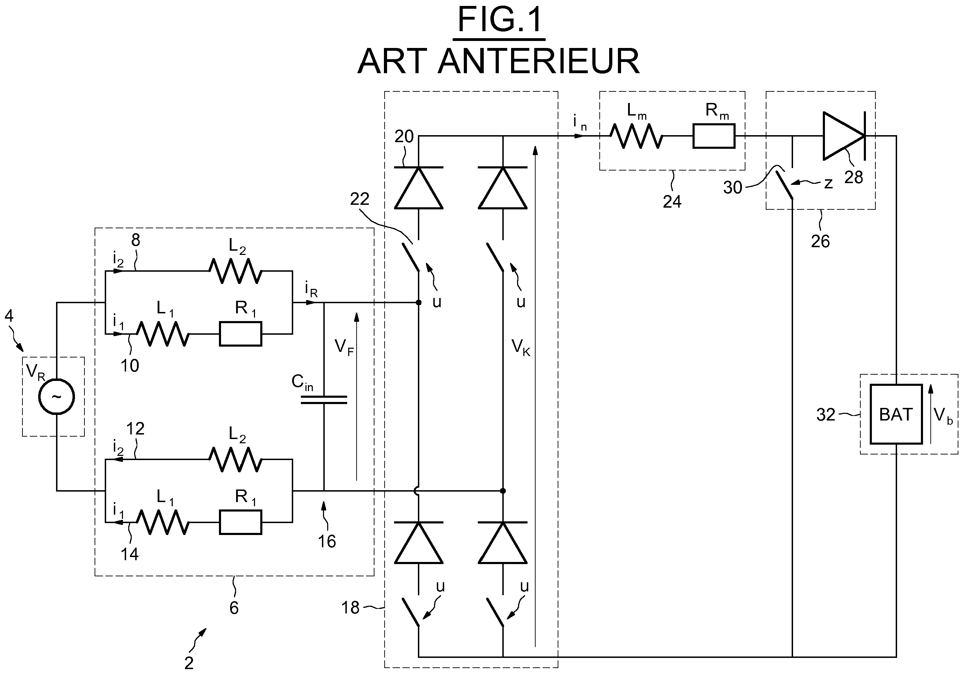

Sur la figure 1, on a représenté un schéma électrique simplifié d'un dispositif de charge 2 tel que décrit dans le document WO 2012/140 374. Le dispositif 2 est raccordé à un réseau électrique 4 monophasé de tension $V_R$ et de courant $i_R$.

Le dispositif 2 comporte successivement un étage de filtrage 6 raccordé au réseau 4, un étage abaisseur de tension 18, une machine électrique 24 et un étage élévateur de tension 26. L'étage de filtrage 6 comprend quatre branches référencées 8, 10, 12 et 14 raccordées deux à deux en parallèle. Les branches 10 et 14 comportent une première inductance $L_1$ et une résistance $R_1$ et les branches 8 et 12 comportent une deuxième inductance $L_2$. L'étage de filtrage 6 comporte un condensateur de sortie de capacité Cin raccordé entre les nœuds communs entre les branches 8 et 10 d'une part, et les branches 12 et 14, d'autre part.

L'étage abaisseur de tension 18 comporte quatre diodes 20 et quatre interrupteurs 22 répartis sur deux branches raccordées à l'étage 6. Les interrupteurs 22 sont pilotés par une fonction de pilotage u, par exemple une tension carrée de rapport cyclique variable. L'étage 18 délivre en sortie une tension $V_k$ et un courant $i_n$ redressé.

Le dispositif de charge est par exemple une représentation simplifiée du dispositif décrit dans le document FR2943188 en utilisation monophasée.

L'étage 18 est raccordé à une inductance en série avec les inductances de la machine électrique du véhicule. Toutes ces inductances 24 sont schématiquement représentées par une inductance équivalente $L_m$ et une résistance équivalente $R_m$.

L'étage élévateur de tension 26 est raccordé en série avec la machine électrique 24. Dans le schéma simplifié de la figure 1, l'étage 26 comporte une diode 28 et un interrupteur 30. L'interrupteur 30 est piloté par une fonction de pilotage z, par exemple une tension carrée de rapport cyclique variable.

Sur la figure 1, on a schématiquement représenté une batterie d'accumulation électrique 32. La batterie 32 est raccordée au dispositif de charge 2 en sortie de l'étage élévateur de tension 26. La tension aux bornes de la batterie 32 est $V_b$.

Un tel dispositif de charge fonctionne de manière satisfaisante lorsque les conditions de recharge de la batterie sont idéales, c'est-à-dire lorsque l'impédance de lignes entre le réseau 4 et l'étage de filtrage 6 est sensiblement nulle et la tension monophasée d'alimentation $V_R$ ne présente pas de composantes harmoniques, la tension $V_R$ étant une tension parfaitement sinusoïdale.

Lorsqu'un tel dispositif est raccordé à un réseau monophasé délivrant une tension d'alimentation comportant des composantes harmoniques, le dispositif de charge 2 rejette des perturbations harmoniques contenues dans la tension d'alimentation, mais pas suffisamment pour remplir toutes les exigences de la norme de compatibilité électromagnétique CEM selon le standard IEC 61000-3-2 lorsque l'impédance de ligne n'est plus sensiblement nulle.

La partie inductive de l'impédance de ligne entraîne de fortes variations de la tension d'alimentation $V_R$.

Le déphasage entre la tension d'alimentation et le courant d'alimentation n'est pas asservi d'une façon active par la stratégie de commande du dispositif 2. Par conséquent le rendement de l'opération de charge n'est pas optimal.

L'invention a donc pour but de permettre la charge d'une batterie d'accumulation électrique depuis un réseau monophasé lorsque les conditions de charge ne sont pas idéales en conservant les mêmes performances de charge que lorsque l'impédance de ligne est sensiblement nulle et la tension d'alimentation du réseau ne comporte pas d'harmoniques.

L'invention est définie par les revendications indépendantes. Les modes particuliers de réalisation sont définis par les revendications dépendantes.

Au vu de ce qui précède l'invention a pour objet un dispositif de charge d'une batterie d'accumulation électrique comprenant un étage de filtrage destiné à être raccordé à un réseau électrique, un étage abaisseur de tension raccordé à l'étage de filtrage et un étage élévateur de tension couplé à l'étage abaisseur de tension et destiné à être raccordé à une batterie d'accumulation électrique, ledit dispositif de charge comprenant un système de pilotage des étages abaisseur et élévateur de tension du dispositif de charge.

Le couplage entre l'étage abaisseur de tension et l'étage élévateur de tension peut comprendre des éléments intermédiaires tels qu'une ou plusieurs inductances.

Le système de pilotage comprend :

- un premier observateur d'au moins deux variables d'état, lesdites variables d'état comprenant une tension de sortie de l'étage de filtrage et un courant circulant à travers une inductance, et
- une boucle à verrouillage de phase reliée à un deuxième observateur apte à estimer une dérivée.

Le système de pilotage comprend un filtre passe-bas relié au deuxième observateur et apte à atténuer des variations du signal reçu du deuxième observateur.

Selon une autre caractéristique du dispositif, le système de pilotage comprend en outre un module d'élaboration de consigne apte à élaborer les fonctions de pilotage des étages abaisseur et élévateur de tension en déterminant des rapports cycliques desdites fonctions de sorte qu'un courant délivré par un réseau électrique comporte des harmoniques d'ordre supérieur de niveaux inférieurs à ceux définis dans le standard IEC 61000-3-2 et qu'un courant de charge de la batterie soit égal à un courant de consigne de charge, à partir des données fournies par lesdits observateurs.

Le dispositif comprend en outre un module de mesure de tensions et de courants.

L'invention a aussi pour objet un procédé de charge d'une batterie d'accumulation électrique à partir d'un dispositif de charge comprenant un étage de filtrage raccordé à un réseau électrique, un étage abaisseur de tension raccordé à l'étage de filtrage et un étage élévateur de tension couplé à l'étage abaisseur de tension et raccordé à une batterie d'accumulation électrique.

On utilise un premier observateur pour déterminer des variables d'état, lesdites variables d'état comprenant une tension de sortie de l'étage de filtrage et un courant circulant à travers une inductance, on utilise un deuxième observateur pour estimer une dérivée première d'une variable de perturbation et on asservit au moins l'une des variables d'état.

On filtre le signal délivré par le deuxième observateur de manière à atténuer les effets des discontinuités de la dérivée première.

Selon une autre caractéristique du procédé, on calcule des dérivées première et seconde d'un courant de consigne du courant délivré par un réseau d'alimentation électrique.

De préférence, on détermine une commande virtuelle de la tension de sortie de l'étage de filtrage à partir notamment de la variable de perturbation, du courant de consigne et de sa dérivée première, du courant circulant à travers les inductances et du courant délivré par le réseau d'alimentation.

Selon encore une autre caractéristique du procédé, on élabore le rapport cyclique de la fonction de pilotage de l'étage abaisseur de tension à partir des données fournies par lesdits observateurs et de l'erreur de suivi de la tension de sortie de l'étage de filtrage par rapport à ladite commande virtuelle.

Avantageusement, on élabore le rapport cyclique de la fonction de pilotage de l'étage élévateur de tension à partir des données fournies par lesdits observateurs et de l'erreur de suivi de la tension de sortie de l'étage de filtrage par rapport à ladite commande virtuelle.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1, qui a déjà été décrite, représente un dispositif de charge de l'art antérieur ;
- la figure 2 illustre un dispositif de charge selon un aspect de l'invention ;
- la figure 3 illustre un système de pilotage incorporé dans le dispositif de charge de la figure 2 ; et
- la figure 4 illustre un procédé de pilotage d'un dispositif de charge selon un aspect de l'invention.

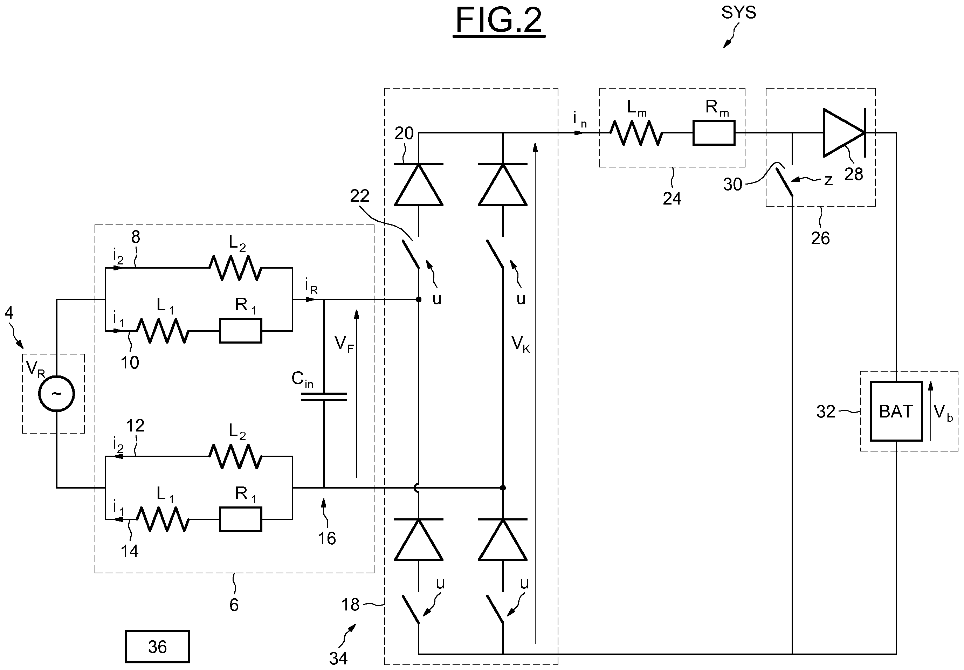

On a schématiquement représenté sur la figure 2 un dispositif de charge 34 selon un aspect de l'invention. Les éléments du dispositif 34 identiques aux éléments constituant le dispositif 2 de la figure 1 portent les mêmes références.

En outre, le dispositif 34 est raccordé à un réseau électrique 4 monophasé délivrant une tension $V_R$ et un courant $i_R$ et à une batterie d'accumulation électrique 32 de tension Vb.

Le dispositif 34, le réseau électrique 4 et la batterie d'accumulation électrique 32 sont incorporés dans un système SYS de charge.

Le dispositif 34 comprend un système de pilotage 36 ayant pour fonction de commander les interrupteurs 22 de l'étage abaisseur 18 et l'interrupteur 30 de l'étage élévateur de tension 26 en élaborant les fonctions de pilotage u et z.

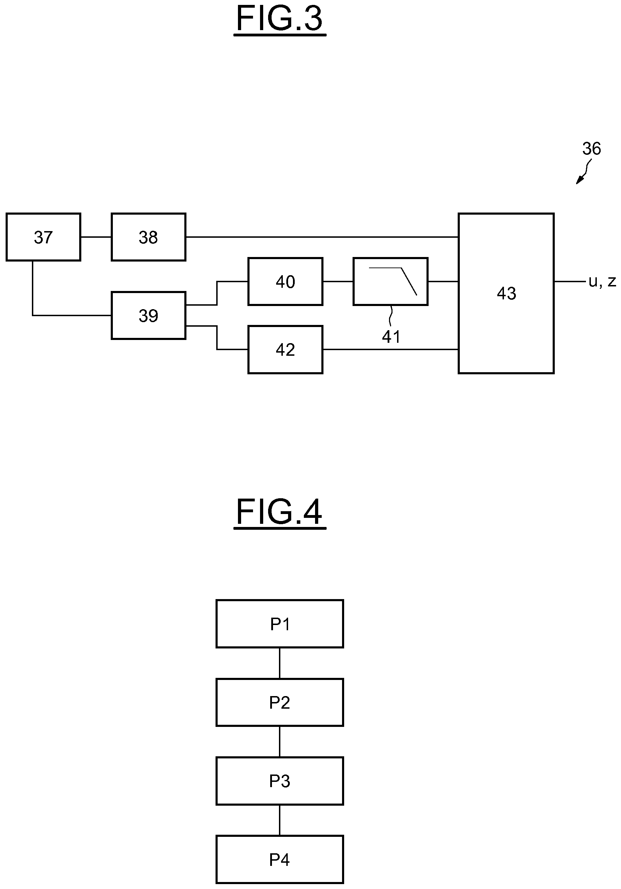

Le système 36 est représenté en détail sur la figure 3.

Le système 36 comprend un module de mesure 37, un premier observateur 38, une boucle à verrouillage de phase 39, un deuxième observateur 40, un filtre passe-bas 41, un dérivateur 42 et un module d'élaboration 43 de commande des fonctions de pilotage u et z.

Le module 37 est capable de mesurer les tensions $V_R$ et Vb et les courants $i_R$ et $i_n$.

Le module 37 est relié au premier observateur 38 et à la boucle à verrouillage de phase 39.

Le premier observateur 38 comprend un filtre de Kalman étendu et a pour fonction d'estimer la valeur de la tension $V_F$ aux bornes des condensateurs Cin, d'estimer la valeur du courant $i_2$ circulant à travers les deuxièmes inductances $L_2$ à partir des mesures transmises par le module de mesure 37 et de transmettre les valeurs estimées au module d'élaboration 43.

La boucle à verrouillage de phase 39 est reliée au deuxième observateur 40 et au dérivateur 42 dont une sortie est reliée au module d'élaboration 43.

La sortie du deuxième observateur 40 est reliée au filtre passe-bas 41 dont une sortie est reliée au module d'élaboration 43.

La boucle à verrouillage de phase 39 a pour fonction de générer et transmettre un signal sinusoïdal de même fréquence et de même phase que le premier harmonique de la tension $V_R$. du réseau.

La fréquence et le déphasage déterminés par la boucle 39 sont transmis au deuxième observateur 40 comprenant un filtre de Kalman apte à estimer la dérivée première $\dfrac{dV_R}{dt}$ de la tension $V_R$ du réseau et au dérivateur 42 apte à calculer la dérivée première $\dfrac{di_R^C}{dt}$ et la dérivée seconde $\dfrac{d^2i_R^C}{dt^2}$ d'un courant $i_R^C(t)$ de consigne du réseau.

Les discontinuités de la dérivée $\dfrac{dV_R}{dt}$ induisent de fortes variations du courant $i_R$ délivré par le réseau. Par conséquent, la partie inductive de l'impédance de ligne entraîne de fortes variations de la tension $V_R$ du réseau.

Le filtre passe-bas 41 a pour fonction d'atténuer les discontinuités de l'estimation de la dérivée $\dfrac{dV_R}{dt}$ de la tension $V_R$ du réseau.

Le module d'élaboration 43 de commande a pour fonction d'élaborer une loi de commande non linéaire visant à réguler le courant de charge $i_n$ selon une consigne de courant de charge $i_n^C$ tout en limitant à son fondamental le contenu harmonique du courant $i_R$ délivré par le réseau.

En d'autres termes, le courant $i_R$ délivré par le réseau doit se comporter selon le courant $i_R^C(t)$ de consigne du courant $i_R$ tel que :

$$i_R^C(t) = I_R^C \sin(\omega t) \qquad (1)$$

où $I_R^C$ est l'amplitude désirée du courant $i_R$ délivré par le réseau et $\omega$ est la pulsation du réseau électrique 4.

La loi de commande non linéaire est élaborée en s'appuyant sur la valeur moyenne des courants et tensions du dispositif de charge 34 pendant une période Tc de commutation des interrupteurs des étages abaisseur et élévateur de tension.

Par exemple, la période Tc de commutation est égale à 100 µs.

La loi de commande agit sur les fonctions de pilotage u et z respectivement des interrupteurs 22 de l'étage abaisseur 18 et de l'interrupteur 30 de l'étage élévateur 26 en ajustant les rapports cycliques a(t) et β(t) des fonctions de pilotage u et z définis par

$$\alpha(t) = \frac{1}{Tc} \int_t^{t+Tc} u(\tau)d\tau \ , \ et \qquad (2)$$

$$\beta(t) = \frac{1}{Tc} \int_t^{t+Tc} z(\tau)d\tau \qquad (3)$$

Le module d'élaboration 43 de commande élabore les fonctions de pilotage u et z.

Par la suite est détaillé un modèle du système SYS permettant de calculer les variables de commande a(t) et β(t).

Les rapports cycliques a(t) et β(t) des fonctions de pilotage u et z sont déterminés à partir du modèle du système SYS de charge suivant :

$$\begin{cases} C_{in} \frac{dV_F(t)}{dt} = i_R(t) - i_n(t)\alpha(t) \\ 2L_1 \frac{di_1(t)}{dt} = V_R(t) - V_F(t) - 2R_1 i_1(t) \\ 2L_2 \frac{di_2(t)}{dt} = V_R(t) - V_F(t) \\ L_m \frac{di_n(t)}{dt} = V_F(t)\alpha(t) - \beta(t)V_b(t) - R_m i_n(t) \end{cases} \qquad (4)$$

Soient un vecteur d'état X comprenant des variables d'état, un vecteur de commande C comprenant des variables de commande et un vecteur de perturbation D comprenant des variables de perturbation :

$$X=\{V_F, i_1, i_2, i_n\} \ , \qquad\qquad (5)$$

$$C=\{\alpha, \beta\} \ , \qquad\qquad (6)$$

$$D=\{V_R, V_b\} . \qquad\qquad (7)$$

Le modèle (4) peut être formulé sous la forme générique suivante :

$$\frac{dX}{dt} = f(X, C, D) \qquad\qquad (8)$$

L'élaboration de la loi de commande non linéaire est une commande de type « back stepping » fondée sur les principes connus dans l'état de la technique sous l'expression anglo-saxonne « back-stepping ».

Le calcul des paramètres de la loi de commande utilise des fonctions de Lyapunov (« control Lyapunov function », en anglais).

On impose d'une façon itérative une forme triangulaire à la représentation du modèle (4) du système SYS de charge.

En supposant que le courant $i_R$ délivré par le réseau est tel que :

$$i_R(t) = i_1(t) + i_2(t) \qquad\qquad (9)$$

l'évolution du courant $i_R$ délivré par le réseau peut être exprimée sous la forme :

$$2L_1 \frac{di_R}{dt} = (V_R - V_F)\frac{(L_2+L_1)}{L_2} - 2R_1 i_R + 2R_1 i_2 \quad (10)$$

Soit $\varepsilon_{i_R}$ une erreur de suivi de consigne du courant $i_R$ délivré par le réseau et ayant pour expression :

$$\epsilon_{i_R} = i_R - i_R^C \qquad\qquad (11)$$

La tension $V_F$ aux bornes du condensateur Cin de la branche 16 est choisie comme une commande virtuelle (« fictious control » en anglais) permettant d'imposer une dynamique souhaitée à l'évolution de l'erreur $\varepsilon_{i_R}$ de suivi de consigne du courant $i_R$.

En partant de l'équation (10), l'évolution du signal d'erreur $\varepsilon_{i_R}$ est donnée par :

$$\frac{d\epsilon_{i_R}}{dt} = \frac{(V_R - V_F)\frac{(L_2 + L_1)}{L_2} - 2R_1 i_R + 2R_1 i_2}{2L_1} - \frac{di_R^C}{dt} \qquad (12)$$

En remplaçant le courant $i_R$ délivré par le réseau dans l'équation (12) par $\epsilon_{i_R} + i_R^C$, on obtient :

$$\frac{d\epsilon_{i_R}}{dt} = -\frac{R_1 \epsilon_{i_R}}{L_1} + \frac{(V_R - V_F)\frac{(L_2 + L_1)}{L_2} - 2R_1 i_R^C + 2R_1 i_2}{2L_1} - \frac{di_R^C}{dt} \qquad (13)$$

Le principe de la commande repose sur le calcul de la tension $V_F$ choisie comme une commande virtuelle $V_F = V_F^*$. $V_F$

Le terme $-\frac{R_1}{L_1}\epsilon_{i_R}$ dans l'équation (13) induit une dynamique exponentielle stable pour $\varepsilon_{i_R}$. Il est préférable de ne pas compenser le terme $-\frac{R_1}{L_1}\epsilon_{i_R}$ par la commande virtuelle $V_F^*$.

Le calcul du terme $-\frac{R_1}{L_1}\epsilon_{i_R}$ est effectué au moyen d'une première fonction $V_1(\epsilon_{i_R})$ de Lyapunov telle que :

$$V_1\left(\epsilon_{i_R}\right) = \frac{1}{2}\epsilon_{i_R}^2 \qquad (14)$$

où $\lim_{\epsilon_{i_R} \to \infty} V_1\left(\epsilon_{i_R}\right) = \infty,$ et choisie afin de rendre l'équation (13) exponentiellement stable en respectant la condition suivante :

$$\frac{dV_1}{dt} < 0 \qquad (15),$$

soit

$$\frac{dV_1}{dt} = \frac{\partial V_1}{\partial \epsilon_{i_R}} * \frac{d\epsilon_{i_R}}{dt} = \epsilon_{i_R} * \frac{d\epsilon_{i_R}}{dt} < 0 \qquad (16)$$

En remplaçant l'erreur $\varepsilon_{i_R}$ de suivi de consigne par la première fonction de Lyapunov dans l'équation (13), on obtient :

$$\frac{dV_1}{dt} = -\frac{R_1}{L_1}\epsilon_{i_R}^2 + \left(\frac{(V_R - V_F^*)\frac{(L_2 + L_1)}{L_2} - 2R_1 i_R^C + 2R_1 i_2}{2L_1} - \frac{di_R^C}{dt}\right)\epsilon_{i_R} < 0 \qquad (17)$$

En introduisant une constante $c_1$ telle que $\left(c_1 + \frac{R_1}{L_1}\right) > 0,$ la condition (15) est assurée si :

$$\left(\frac{(V_R - V_F^*)\frac{(L_2 + L_1)}{L_2} - 2R_1 i_R^C + 2R_1 i_2}{2L_1} - \frac{di_R^C}{dt}\right) = -c_1 \epsilon_{i_R} \qquad (18)$$

En partant de l'équation (18), la commande virtuelle $V_F^*$ est telle que :

$$V_F^* = L_2 \left( V_R \frac{(L_2+L_1)}{L_2} - 2R_1 i_R^C + 2R_1 i_2 - 2L_1 \frac{di_R^C}{dt} + 2L_1 c_1 \epsilon_{i_R} \right) / (L_2 + L_1) \qquad (19)$$

La commande $V_F^*$ étant une commande virtuelle, il s'agit par la suite de revenir vers la commande physique du rapport cyclique a(t) de la fonction de pilotage u en posant

$$V_F = V_F^* + \epsilon_{V_F} \qquad\qquad (20)$$

où $\varepsilon_{V_F}$ est l'erreur de suivi de la consigne de la tension $V_F$.

En remplaçant dans l'équation (12) $V_F$ par (20), on obtient :

$$\frac{d\epsilon_{i_R}}{dt} = -\left( c_1 + \frac{R_1}{L_1} \right) \epsilon_{i_R} - \frac{(L_2+L_1)}{2L_2L_1} \epsilon_{V_F} \qquad (21)$$

Comme l'équation (21) caractérise une dynamique exponentiellement stable, l'erreur $\varepsilon_{i_R}$ de suivi de consigne de courant tend vers 0 ou est bornée si l'erreur $\varepsilon_{V_F}$ tend vers 0 ou est bornée.

On cherche à ce que $\varepsilon_{V_F}$ converge exponentiellement vers 0.

Pour satisfaire le critère de convergence exponentielle de $\varepsilon_{V_F}$ vers 0, une deuxième fonction $V_2$ de Lyapunov est construite telle que :

$$V_2 \left( \epsilon_{i_R}, \epsilon_{V_F} \right) = V_1 \left( \epsilon_{i_R} \right) + \frac{1}{2} \epsilon_{V_F}^2 \qquad (22)$$

où

$$\lim_{\epsilon_{i_R}, \epsilon_{V_F} \to \infty} V_1 \left( \epsilon_{i_R}, \epsilon_{V_F} \right) = \infty.$$

La deuxième fonction $V_2$ permet de concevoir la commande physique a(t) en déterminant la deuxième fonction $V_2$ de sorte que la dérivée temporelle de la fonction $V_2$ soit être rendue négative :

$$\frac{dV_2}{dt} < 0 \qquad\qquad (23)$$

soit

$$\frac{dV_2}{dt} = \frac{dV_2}{d\epsilon_{i_R}} \frac{d\epsilon_{i_R}}{dt} + \frac{dV_2}{d\epsilon_{V_F}} \frac{d\epsilon_{V_F}}{dt} = \epsilon_{i_R} \frac{d\epsilon_{i_R}}{dt} + \epsilon_{V_F} \frac{d\epsilon_{V_F}}{dt} < 0 \quad (24)$$

La dérivée $\frac{d\epsilon_{V_F}}{dt}$ de $\varepsilon_{V_F}$ est obtenue à partir de la première équation du modèle (4) et de l'équation (19) de sorte que :

$$\frac{d\epsilon_{V_F}}{dt} = \frac{i_R(t) - i_n(t)\,\alpha(t)}{C_{in}} - A \qquad\qquad (25)$$

où

$$A = L_2 \frac{\frac{dV_R(L_2+L_1)}{dt} - 2R_1 \frac{di_R^C}{dt} + 2R_1 \frac{di_2}{dt} - 2L_1 \frac{d^2 i_R^C}{dt^2} + 2L_1 c_1 \frac{d\epsilon_{i_R}}{dt}}{L_1 + L_2} \qquad (26)$$

En combinant la troisième équation du modèle (4), l'équation (20) et l'équation (21), on obtient :

$$\frac{d\epsilon_{V_F}}{dt}$$
$$= \frac{i_R(t) - i_n(t)\,\alpha(t)}{C_{in}}$$
$$- L_2 \frac{\frac{dV_R}{dt}\frac{(L_2+L_1)}{L_2} - 2R_1 \frac{di_R^C}{dt} + \frac{R_1}{L_2}(V_R - V_F^* - \epsilon_{V_F})(V_R - V_F) - 2L_1 \frac{d^2 i_R^C}{dt^2}}{L_1 + L_2}$$
$$+ \frac{2L_1 L_2 c_1 \left( \left(c_1 + \frac{R_1}{L_1}\right)\epsilon_{i_R} + \frac{(L_2+L_1)}{2L_2 L_1}\epsilon_{V_F} \right)}{L_1 + L_2}$$
$$(27)$$

En injectant l'équation (27) dans l'équation (24), on obtient :

$$\frac{dV_2}{dt} = -\left(c_1 + \frac{R_1}{L_1}\right)\epsilon_{i_R}^2 - \frac{(L_2+L_1)}{2L_2 L_1}\epsilon_{V_F}\epsilon_{i_R}$$
$$+ \epsilon_{V_F} \Bigg( \frac{i_R(t) - i_n(t)\,\alpha(t)}{C_{in}}$$
$$- L_2 \frac{\frac{dV_R}{dt}\frac{(L_2+L_1)}{L_2} - 2R_1 \frac{di_R^C}{dt} + \frac{R_1}{L_2}(V_R - V_F^* - \epsilon_{V_F}) - 2L_1 \frac{d^2 i_R^C}{dt^2}}{L_1 + L_2}$$
$$+ \frac{2L_1 L_2 c_1 \left( \left(c_1 + \frac{R_1}{L_1}\right)\epsilon_{i_R} + \frac{(L_2+L_1)}{2L_2 L_1}\epsilon_{V_F} \right)}{L_1 + L_2} \Bigg) < 0$$
$$(28)$$

L'équation (28) peut être réordonnée sous la forme suivante :

$$\frac{dV_2}{dt} = -\left(c_1 + \frac{R_1}{L_1}\right)\epsilon_{i_R}^2 + \left(c_1 + \frac{R_1}{L_1 + L_2}\right)\epsilon_{V_F}^2$$

$$+ \epsilon_{V_F}\left( \frac{i_R^C + \epsilon_{i_R} - i_n(t)\,\alpha(t)}{C_{in}} - \frac{(L_2 + L_1)}{2L_2L_1}\epsilon_{i_R} \right.$$

$$- L_2 \frac{\dfrac{dV_R}{dt}\dfrac{(L_2 + L_1)}{L_2} - 2R_1\dfrac{di_R^C}{dt} + \dfrac{R_1}{L_2}(V_R - V_F^*) - 2L_1\dfrac{d^2i_R^C}{dt^2}}{L_1 + L_2}$$

$$\left. + \frac{2L_1L_2c_1\left(c_1 + \dfrac{R_1}{L_1}\right)}{L_1 + L_2}\epsilon_{i_R} \right) < 0$$

$$(29)$$

Pour rendre le terme $\dfrac{dV_2}{dt}$ négatif, il suffit d'imposer :

$$\frac{i_R^C - i_n(t)\,\alpha(t)}{C_{in}} - \frac{(L_2 + L_1)}{2 * L_2L_1}\epsilon_{i_R}$$

$$- L_2 \frac{\dfrac{dV_R}{dt}\dfrac{(L_2 + L_1)}{L_2} - 2R_1\dfrac{di_R^{C*}}{dt} + \dfrac{R_1}{L_2}(V_R - V_F^*) - 2L_1\dfrac{d^2i_R^C}{dt^2}}{L_1 + L_2}$$

$$+ \frac{2L_1L_2c_1\left(c_1 + \dfrac{R_1}{L_1}\right)}{L_1 + L_2}\epsilon_{i_R} = -c_2\epsilon_{V_F}$$

$$(30)$$

où $c_2$ est une constante positive.
On obtient alors

$$\alpha(t) = \frac{C_{in}}{i_n}\left( c_2\epsilon_{V_F} + \frac{i_R^C}{C_{in}} - \epsilon_{i_R}\left( \frac{(L_2 + L_1)}{2L_2L_1} - \frac{2L_1L_2c_1\left(c_1 + \dfrac{R_1}{L_1}\right)}{L_1 + L_2} \right) \right.$$

$$\left. - L_2 \frac{\dfrac{dV_R}{dt}\dfrac{(L_2 + L_1)}{L_2} - 2R_1\dfrac{di_R^C}{dt} + \dfrac{R_1}{L_2}(V_R - V_F^*) - 2L_1\dfrac{d^2i_R^C}{dt^2}}{L_1 + L_2} \right)$$

$$(31)$$

et

$$\frac{dV_2}{dt} = -\left(c_1 + \frac{R_1}{L_1}\right)\epsilon_{i_R}^2 - \left(-c_1 + c_2 - \frac{R_1}{L_1 + L_2}\right)\epsilon_{V_F}^2 + \frac{\epsilon_{V_F}\epsilon_{i_R}}{C_{in}} < 0 \qquad (32)$$

où la constante $c_2$ est choisie telle que :

$$c_2 > c_1 + \frac{R_1}{L_1+L_2} \qquad (33)$$

afin que le terme $\frac{\epsilon_{V_F}\epsilon_{i_R}}{C_{in}}$ soit dominé par le reste du membre de droite de l'équation (32) permettant de garantir que la dérivée temporelle de la fonction $V_2$ est définie négative.

L'évolution de l'erreur $\varepsilon_{V_F}$ de suivi de la consigne $V_F$ est alors asymptotiquement stable et on obtient :

$$\frac{d\epsilon_{V_F}}{dt} = -\left(c_2-c_1-\frac{R_1}{L_1+L_2}\right)\epsilon_{V_F} + \epsilon_{i_R}\left(\frac{(L_1+L_2)}{2L_1L_2} + \frac{1}{C_{in}}\right) \qquad (34)$$

On détermine la loi de commande du rapport cyclique β(t) de la fonction de pilotage z en utilisant la même démarche que celle employée pour déterminer la loi de commande du rapport cyclique a(t) de la fonction de pilotage u.

On introduit une troisième fonction $V_3$ de Lyapunov telle que :

$$V_3\left(\epsilon_{i_R}, \epsilon_{V_F}, \epsilon_{i_n}\right) = V_2 + \frac{1}{2}\epsilon_{i_n}^2 + \frac{g_{int}}{2}\left(\int_0^t \epsilon_{i_n}\right)^2 \qquad (35)$$

où $g_{int} \in R^+$ et est par exemple égale à la valeur 10, $\varepsilon_{i_n}$ est une erreur de suivi de consigne du courant $i_n$ de charge

$$\epsilon_{i_n} = i_n - i_n^C \qquad (36)$$

et la loi de commande du rapport cyclique β(t) est déterminée de sorte que la dérivée temporelle de la troisième fonction $V_3$ soit définie négative :

$$\frac{dV_3}{dt} < 0 \qquad (37)$$

soit

$$\frac{dV_3}{dt} = \frac{dV_2}{dt} + \epsilon_{i_n}\frac{d\epsilon_{i_n}}{dt} + g_{int}\epsilon_{i_n}\int_0^t \epsilon_{i_n} < 0 \qquad (38)$$

Par construction la dérivée de la deuxième fonction $V_2$ est définie négative.

Pour que $\frac{dV_3}{dt}$ soit définie négative, il suffit d'imposer :

$$\epsilon_{i_n}\left(\frac{d\epsilon_{i_n}}{dt} + g_{int}\int_0^t \epsilon_{i_n}\right) < 0 \qquad (39)$$

En utilisant la quatrième équation du modèle (4), on obtient :

$$\epsilon_{in}\left(\frac{d\epsilon_{in}}{dt} + g_{int}\int_0^t \epsilon_{i_n}\right) = \frac{\epsilon_{i_n}\left(V_F\alpha - V_B\beta - \epsilon_{i_n}R_m - i_n^C R_m\right)}{L_m} + \epsilon_{i_n}g_{int}\int_0^t \epsilon_{i_n}$$

$$= -\epsilon_{i_n}^2\frac{R_m}{L_m} + \frac{\epsilon_{i_n}\left(V_F\alpha - V_B\beta - i_n^C R_m + g_{int}L_m\int_0^t \epsilon_{i_n}\right)}{L_m}$$

$$(40)$$

Puis en introduisant une constante $c_3 > 0$ telle que :

$$\frac{\epsilon_{i_n}\left(V_F\alpha - V_B\beta - i_n^C R_m + g_{int}L_m\int_0^t \epsilon_{i_n}\right)}{L_m} = -c_3\epsilon_{i_n}^2$$

$$(41)$$

Puis en injectant l'équation (41) dans l'équation (40), on obtient :

$$\beta(t) = \frac{V_F\alpha(t) - i_n^C R_m + c_3 L_m\epsilon_{i_n} + g_{int}L_m\int_0^t \epsilon_{i_n}}{V_b} \qquad (42)$$

$$\frac{dV_3}{dt} = \frac{dV_2}{dt} - \left(c_3 + \frac{R_m}{L_m}\right)\epsilon_{i_n}^2 < 0 \qquad (43)$$

$$\frac{d\epsilon_{i_n}}{dt} = -\left(c_3 + \frac{R_m}{L_m}\right)\epsilon_{i_n} - g_{int}L_m\int_0^t \epsilon_{i_n} \qquad (44)$$

L'équation (43) conduit à une erreur nulle en régime permanent de l'erreur $\varepsilon_{in}$ de suivi de consigne du courant de charge et l'équation (44) impose que l'intégrale de l'erreur $\varepsilon_{in}$ de suivi de consigne soit nulle en régime permanent.

On se réfère à présent à la figure 4 qui illustre schématiquement un procédé de pilotage du dispositif de charge 34.

Le calcul des rapports cycliques a(t) et $\beta$(t) des fonctions de pilotage u et z est fonction de la tension $V_F$ aux bornes du condensateur $C_{in}$ et du courant $i_2$ circulant dans les deuxièmes inductances $L_2$. Ces deux grandeurs ne sont pas mesurées. Il est nécessaire d'estimer ces grandeurs.

Le procédé comprend une première phase P1 d'estimation de la tension $V_F$ aux bornes du condensateur $C_{in}$ et du courant $i_2$ circulant dans les deuxièmes inductances $L_2$ à partir du premier observateur 38, d'estimation de la dérivée $\frac{dV_R}{dt}$ de la tension $V_R$ à partir du deuxième observateur 40 et de calcul des dérivées première $\frac{di_R^C}{dt}$ et seconde $\frac{d^2 i_R^C}{dt^2}$ du courant $i_R^C(t)$ de consigne du courant $i_R$ délivré par le réseau à partir du dérivateur 42.

Dans ce qui suit la mise en œuvre des premier et deuxième observateurs 38 et 40 est détaillée.

Le premier observateur 38 comprend un filtre de Kalman étendu synthétisé à partir du modèle (4) du système SYS de charge décrit ici sous une forme compacte du type $\dot{x} = f(x, c, d)$, et met en œuvre un algorithme d'estimation comprenant une étape de prédiction de l'état suivie d'une étape de mise à jour.

Pour faire converger le premier observateur 38, il est nécessaire de mesurer le courant $i_R$ et la tension $V_R$ délivrés par le réseau et la tension $V_b$ aux bornes de la batterie 32.

Pour la réalisation sous forme numérique du filtre de Kalman, on met par exemple en œuvre une méthode de Runge-Kutta d'ordre 4.

Toute autre méthode apte à réaliser sous forme numérique un filtre de Kalman peut être mise en œuvre.

La méthode de Runge-Kutta est utilisée pour discrétiser le modèle non linéaire (4) employé dans la phase de prédiction de l'algorithme d'estimation.

La période de discrétisation $T_s$ est par exemple égale à 100 $\mu$s.

Au cours de l'étape de prédiction de l'état, on calcule, quelle que soit une variable x et un pas k, une prédiction $\hat{x}_{k|k-1}$ de sa valeur au pas k. On calcule également la matrice $P_{k|k-1}$ de covariance d'erreur de la prédiction au pas k. Pour ce faire, on met en œuvre les équations suivantes :

$$\hat{x}_{k|k-1} = \hat{x}_{k-1|k-1} + \frac{T_s}{6}(k_1 + 2k_2 + 2k_3 + k_4) \qquad (45)$$

$$P_{k|k-1} = F_{k-1} P_{k-1|k-1} F_{k-1}^T + Q_{k-1} \qquad (46)$$

où

$$k_1 = f\left(\hat{x}_{k-1|k-1}, c_k, d_k\right) ; \qquad (47)$$

$$k_2 = f(\hat{x}_{k-1|k-1} + \frac{T_s}{2}f(k_1, \alpha_k, \beta_k) ; \qquad (48)$$

$$k_3 = f\left(\hat{x}_{k-1|k-1} + \frac{T_s}{2}f(k_2, \alpha_k, \beta_k)\right) ; \qquad (49)$$

$$k_4 = f\left(\hat{x}_{k-1|k-1} + T_s f(k_3, \alpha_k, \beta_k)\right) ; \qquad (50)$$

$$F_k = I_4 + \frac{\partial f}{\partial x}\Big|_{x=x_k, \alpha=\alpha_k} T_s$$

$F_k$ est la matrice jacobienne discrète du modèle non-linéaire (4) calculée à chaque pas de calcul où :

$$\frac{\partial f}{\partial x}\Big|_{x=x_k, \alpha=\alpha_k} = \begin{pmatrix} 0 & \frac{1}{C_{in}} & \frac{1}{Cin} & -\frac{\alpha_k}{Cin} \\ -\frac{1}{2L_1} & -\frac{R_1}{L_1} & 0 & 0 \\ -\frac{1}{2L_2} & 0 & 0 & 0 \\ \frac{\alpha_k}{L_m} & 0 & 0 & -\frac{R_m}{L_m} \end{pmatrix} ; \qquad (51)$$

et

$$I_4 = \begin{pmatrix} 1 & 0 & 0 & 0 \\ 0 & 1 & 0 & 0 \\ 0 & 0 & 1 & 0 \\ 0 & 0 & 0 & 1 \end{pmatrix}$$

et $Q_k$ est la matrice de bruit d'état.

Les termes $k_i$ sont des évaluations de la dérivée de la fonction non-linéaire $f$ décrivant le modèle (4) dans la période $kT_s$ de discrétisation.

Puis, au cours de l'étape de mise à jour de la valeur prédite, on détermine, quelle que soit une variable x et un pas k, un écart de sortie $\widetilde{y_k}$, un gain optimal de l'observateur de Kalman $K_k$, une valeur mise à jour $\hat{x}_{k|k}$ de l'état au pas k et une valeur mise à jour $P_{k|k}$ de la matrice de covariance d'erreur d'estimation.

$$\widetilde{y_k} = y_k - H\,\hat{x}_{k|k-1} \qquad (52)$$

$$S_k = H\,P_{k|k-1}\,H^T + R_k \qquad (53)$$

$$K_k = P_{k|k-1}\,H^T S_k^{-1} \qquad (54)$$

$$\hat{x}_{k|k} = \hat{x}_{k|k-1} + K_k\widetilde{y_k} \qquad (55)$$

$$P_{k|k} = (I_9 - K_k H)P_{k|k-1} \qquad (56)$$

où $R_k$ est la matrice des bruits de mesure, H est la matrice d'observation égale à

$$H = \begin{bmatrix} 0 & 1 & 1 & 0 \\ 0 & 0 & 0 & 1 \end{bmatrix}; \qquad (57)$$

et

$S_k$ est la matrice de covariance de l'erreur de prédiction de l'observation.

Le deuxième observateur 40 comprend un filtre de Kalman et met en œuvre un algorithme d'estimation de la dérivée première $\dfrac{dV_R}{dt}$ de la variable de perturbation $V_R$.

Dans une première étape d'élaboration d'un modèle de la tension $V_R$ du réseau, la tension $V_R$ est modélisée par une somme de sinusoïdes comprenant des composantes harmoniques impaires jusqu'à l'ordre cinq de manière à limiter la puissance de calcul nécessaire à sa réalisation en temps réel. Bien entendu, il est possible d'augmenter l'ordre des composantes harmoniques de manière à augmenter la précision de la modélisation de la tension $V_R$.

La tension $V_R$ est modélisée par l'équation suivante :

$$V_R = V_{Rh1}\sin(\omega t) + V_{Rh2}\cos(\omega t) + V_{Rh3}\sin(3\omega t) + V_{Rh4}\cos(3\omega t) +$$
$$V_{Rh5}\sin(5\omega t) + V_{Rh6}\cos(5\omega t) \qquad (58)$$

Un modèle de variation lente est associé à chaque amplitude en interprétant les amplitudes des harmoniques comme des variables d'état.

$$\frac{dV_{Rhi}}{dt} = 0,\ i = \overline{1:6} \qquad (59)$$

Le filtre de Kalman est recalé en utilisant une équation d'observation correspondant au développement en série de Fourier jusqu'à l'ordre 5 de la tension $V_R$ comprenant seulement les harmoniques de rang impair.

Le modèle d'évolution de la tension $V_R$ est discrétisé en utilisant une méthode d'approximation d'Euler explicite de période de discrétisation par exemple égale à 100 µs.

Dans une deuxième étape, la dérivée $\dfrac{dV_R}{dt}$ de la tension $V_R$ est calculée à partir des observations des amplitudes des harmoniques selon :

$$\frac{dV_R}{dt} = \left[V_{Rhi_{k+1}}\right]_{i=\overline{1:6}} S_1^T + \left[V_{Rhi_k}\right]_{i=\overline{1:6}} S_2^T \qquad (60)$$

où

$$S_1 = [\sin(\omega k T_S) \ \cos(\omega k T_S) \ \sin(3\omega k T_S) \ \cos(3\omega k T_S) \ \sin(5\omega k T_S) \ \cos(5\omega k T_S)]$$

et

$$S_2 = [\omega\cos(\omega k T_S) \ -\omega\sin(\omega k T_S) \ 3\omega\cos(3\omega k T_S) \ -3\omega\sin(3\omega k T_S) \ 5\omega\cos(5\omega k T_S) \ - 5\omega\sin(5\omega k T_S)]$$

Puis, lors d'une deuxième phase P2, le module d'élaboration 43 détermine la commande virtuelle $V_F^*$ à partir de l'équation (19).

Lors d'une troisième phase P3, le module d'élaboration 43 détermine le rapport cyclique a(t) de la fonction de pilotage u à partir de l'équation (31).

Puis, lors d'une quatrième phase P4, le module d'élaboration 43 détermine le rapport cyclique β(t) de la fonction de pilotage z à partir de l'équation (42). Il comprend en outre un intégrateur apte à intégrer l'erreur $\varepsilon_{i_n}$ de suivi de consigne du courant $i_n$ de charge.

Le filtre passe-bas 41 a pour fonction d'atténuer les discontinuités de la dérivée $\dfrac{dV_R}{dt}$.

La pulsation de coupure du filtre 41 est déterminée par exemple de sorte que sa bande passante soit réglée sur les observations des amplitudes des harmoniques utilisées pour le calcul de la dérivée selon l'équation (60).

Avantageusement, le système de charge réduit les harmoniques d'ordres supérieurs du courant $i_R$ délivré par le réseau en présence de perturbations harmoniques permanentes sur la tension $V_R$ de réseau et d'une impédance de ligne maximale de manière à respecter le standard IEC 61000-3-2.

En outre, le déphasage entre le courant $i_R$ délivré par le réseau et la tension $V_R$ de réseau est sensiblement nul en présence d'une impédance de ligne fortement inductive.

De plus, la régulation du courant $i_n$ de charge est insensible aux variations brusques de la tension $V_R$ de réseau.

En outre, l'estimation de la tension $V_F$ aux bornes des condensateurs ne nécessite pas de moyens de mesure de tension.

Le système de charge a un comportement robuste par rapport aux variations de fréquence de la tension $V_R$ de réseau et par rapport à l'estimation de la dérivée $\dfrac{dV_R}{dt}$ de la tension $V_R$ de réseau.

De plus, la mise en œuvre du chargeur 34 permet une régulation en temps réel du courant $i_R$ délivré par le réseau d'alimentation électrique.

**Revendications**

1.  Dispositif de charge d'une batterie d'accumulation électrique (32) comprenant un étage de filtrage (6) destiné à être raccordé à un réseau électrique (4), un étage abaisseur de tension (18) raccordé à l'étage de filtrage (6) et un étage élévateur de tension (26) couplé à l'étage abaisseur de tension (18) et destiné à être raccordé à une batterie d'accumulation électrique (32), ledit dispositif de charge (34) comprenant un système de pilotage (36) des étages abaisseur et élévateur de tension (18, 26) du dispositif de charge (34), ledit étage de filtrage comportant deux entrées à chacune desquelles sont connectées deux branches en parallèle comportant l'une un montage série d'une première inductance et d'une résistance, l'autre une deuxième inductance, un condensateur de sortie de l'étage de filtrage étant raccordé entre les nœuds communs aux branches raccordées en parallèle, **caractérisé en ce que** le système de pilotage (36) comprend :

    - un module (37) de mesures de tensions et de courants,
    - un premier observateur (38) relié audit module de mesures, utilisant un filtre de Kalman d'au moins deux variables d'état ($x_i$), lesdites variables d'état comprenant une tension de sortie ($V_F$) de l'étage de filtrage (6) et un courant ($i_2$) circulant à travers une inductance dudit étage de filtrage, apte à transmettre les variables d'état estimées à un module d'élaboration de commande (43), et
    - une boucle à verrouillage de phase (39) reliée audit module de mesures de tensions et de courants, générant un signal sinusoïdal de même fréquence et de même phase que le premier harmonique de la tension dudit réseau électrique ($V_R$), reliée d'une part à un deuxième observateur (40) utilisant un filtre de Kalman apte à estimer une dérivée de la tension dudit réseau électrique ($V_R$), la sortie dudit deuxième observateur (40) étant reliée à un filtre passe-bas (41) dont une sortie est reliée audit module d'élaboration de commande (43), et d'autre part à un dérivateur (42) apte à calculer la dérivée première et la dérivée seconde d'un courant de consigne du réseau électrique et dont la sortie est reliée audit module d'élaboration de commande,

ledit module d'élaboration de commande (43) étant apte à élaborer les fonctions (u,z) de pilotage des étages abaisseur et élévateur de tension de sorte à réguler le courant de charge ($i_n$) selon une consigne de courant de charge tout en limitant à son fondamental le contenu harmonique du courant ($i_R$) délivré par le réseau.

2. Dispositif selon la revendication 1, dans lequel ledit filtre passe-bas (41) relié au deuxième observateur (40) est apte à atténuer les effets des variations du signal reçu du deuxième observateur.

3. Dispositif selon l'une des revendications 1 et 2, dans lequel ledit module (43) d'élaboration de commande est apte à élaborer les fonctions (u, z) de pilotage des étages abaisseur et élévateur de tension en déterminant des rapports cycliques ($\alpha(t)$, $\beta(t)$) desdites fonctions, à partir d'un modèle du dispositif de charge utilisant les données fournies par lesdits observateurs.

4. Procédé de charge d'une batterie d'accumulation électrique (32) à partir d'un dispositif de charge (34) comprenant un étage de filtrage (6) raccordé à un réseau électrique (4), un étage abaisseur de tension (18) raccordé à l'étage de filtrage (6) et un étage élévateur de tension (26) couplé à l'étage abaisseur de tension (18) et raccordé à la batterie d'accumulation électrique (32), ledit étage de filtrage comportant deux entrées à chacune desquelles sont connectées deux branches en parallèle comportant l'une un montage série d'une première inductance et d'une résistance, l'autre une deuxième inductance, un condensateur de sortie de l'étage de filtrage étant raccordé entre les noeuds communs aux branches raccordées en parallèle, **caractérisé en ce qu'**on utilise un premier observateur (38) d'état utilisant un filtre de Kalman pour déterminer des variables d'état, lesdites variables d'état comprenant une tension de sortie ($V_F$) de l'étage de filtrage (6) et un courant ($i_2$) circulant à travers une inductance dudit étage de filtrage, on utilise un deuxième observateur (40) utilisant un filtre de Kalman pour estimer une dérivée première $\left(\frac{dV_R}{dt}\right)$ de la tension dudit réseau électrique ($V_R$), on filtre le signal délivré par le deuxième observateur de manière à atténuer l'effet des discontinuités de la dérivée première $\left(\frac{dV_R}{dt}\right)$, on calcule des dérivées première $\left(\frac{di_R^C}{dt}\right)$ et seconde $\left(\frac{d^2 i_R^C}{dt^2}\right)$ d'un courant $\left(i_R^C\right)$ de consigne du courant ($i_R$) délivré par le réseau d'alimentation électrique et on asservit au moins l'une des variables d'état ($i_n$), par l'élaboration d'une loi de commande non linéaire apte à réguler le courant de charge ($i_n$) selon une consigne de courant de charge tout en limitant à son fondamental le contenu harmonique du courant ($i_R$) délivré par le réseau.

5. Procédé de charge selon la revendication 4, dans lequel on détermine une commande virtuelle $\left(V_F^*\right)$ de la tension de sortie ($V_F$) de l'étage de filtrage (6) à partir notamment de la tension dudit réseau électrique ($V_R$), du courant $\left(i_R^C\right)$ de consigne et de sa dérivée première $\left(\frac{di_R^C}{dt}\right)$, du courant ($i_2$) circulant à travers ladite inductance et du courant ($i_R$) délivré par le réseau d'alimentation.

6. Procédé de charge selon la revendication 5, dans lequel on élabore le rapport cyclique ($\alpha$) de la fonction de pilotage (u) de l'étage abaisseur de tension (18) à partir des données fournies par lesdits observateurs et de l'erreur de suivi de la tension de sortie de l'étage de filtrage (6) par rapport à ladite commande virtuelle.

7. Procédé de charge selon la revendication 6, dans lequel on élabore le rapport cyclique ($\beta$) de la fonction de pilotage (z) de l'étage élévateur de tension (26) à partir des données fournies par lesdits observateurs et de l'erreur de suivi de la tension de sortie de l'étage de filtrage (6) par rapport à ladite commande virtuelle.

**Patentansprüche**

1. Vorrichtung zum Laden einer elektrischen Akkumulatorbatterie (32), die eine Filterungsstufe (6), die dazu bestimmt ist, mit einem Stromnetz (4) verbunden zu werden, eine Spannungserniedrigungsstufe (18), die mit der Filterungsstufe (6) verbunden ist, und eine Spannungserhöhungsstufe (26), die mit der Spannungserniedrigungsstufe (18) gekoppelt ist und dazu bestimmt ist, mit einer elektrischen Akkumulatorbatterie (32) verbunden zu werden, umfasst, wobei die Ladevorrichtung (34) ein System (36) zum Vorsteuern der Spannungserniedrigungsstufe und der Spannungserhöhungsstufe (18, 26) der Ladevorrichtung (34) umfasst, wobei die Filterungsstufe zwei Eingänge besitzt, wovon mit jedem zwei parallele Zweige verbunden sind, wovon einer eine Reihenschaltung aus einer ersten Induktivität und einem Widerstand enthält und der andere eine zweite Induktivität enthält, wobei ein Ausgangskondensator der Filterungsstufe zwischen den gemeinsamen Knoten mit den parallel geschalteten Zweigen verbunden ist, **dadurch gekennzeichnet, dass** das Steuersystem (36) Folgendes umfasst:

   - ein Modul (37) zum Messen von Spannungen und von Strömen,
   - eine erste Beobachtungseinrichtung (38), die mit dem Messmodul verbunden ist, ein Kalman-Filter mit wenigstens zwei Zustandsvariablen ($x_i$) verwendet, wobei die Zustandsvariablen eine Ausgangsspannung ($V_F$) der Filterungsstufe (6) und einen Strom ($i_2$), der durch eine Induktivität der Filterungsstufe fließt, umfassen, und die die geschätzten Zustandsvariablen an ein Befehlsverarbeitungsmodul (43) übertragen kann, und
   - eine Phasenverriegelungsschleife (39), die mit dem Modul zum Messen von Spannungen und Strömen verbunden ist und ein Sinussignal mit derselben Frequenz und derselben Phase wie die erste Harmonische der Spannung ($V_R$) des Stromnetzes erzeugt und einerseits mit einer zweiten Beobachtungseinrichtung (40) verbunden ist, die ein Kalman-Filter verwendet, das eine Ableitung der Spannung des Stromnetzes ($V_R$) schätzen kann, wobei der Ausgang der zweiten Beobachtungseinrichtung (40) mit einem Tiefpassfilter (41) verbunden ist, dessen Ausgang mit dem Befehlsverarbeitungsmodul (43) verbunden ist, und andererseits mit einer Ableitungseinrichtung (42) verbunden ist, die die erste Ableitung und die zweite Ableitung eines Sollstroms des Stromnetzes berechnen kann und deren Ausgang mit dem Befehlsverarbeitungsmodul verbunden ist,

   wobei das Befehlsverarbeitungsmodul (43) die Vorsteuerfunktionen (u, z) der Spannungserniedrigungsstufe und der Spannungserhöhungsstufe verarbeiten kann, derart, dass der Ladestrom ($i_n$) in Übereinstimmung mit einem Lade-Sollstrom reguliert wird und dabei der harmonische Gehalt des von dem Netz gelieferten Stroms ($i_R$) auf seine Grundschwingung begrenzt wird.

2. Vorrichtung nach Anspruch 1, wobei das Tiefpassfilter (41), das mit der zweiten Beobachtungseinrichtung (40) verbunden ist, die Wirkungen der Schwankungen des von der zweiten Beobachtungseinrichtung empfangenen Signals dämpfen kann.

3. Vorrichtung nach einem der Ansprüche 1 und 2, wobei das Befehlsverarbeitungsmodul (43) die Vorsteuerfunktionen (u, z) der Spannungserniedrigungsstufe und der Spannungserhöhungsstufe durch Bestimmen der Tastverhältnisse ($\alpha(t)$, $\beta(t)$) der Funktionen anhand eines Modells der Ladevorrichtung unter Verwendung der von den Beobachtungseinrichtungen gelieferten Daten verarbeiten kann.

4. Verfahren zum Laden einer elektrischen Akkumulatorbatterie (32) mittels einer Ladevorrichtung (34), die eine Filterungsstufe (6), die mit einem Stromnetz (4) verbunden ist, eine Spannungserniedrigungsstufe (18), die mit der Filterungsstufe (6) verbunden ist, und eine Spannungserhöhungsstufe (26), die mit der Spannungserniedrigungsstufe (18) gekoppelt ist und mit der elektrischen Akkumulatorbatterie (32) verbunden ist, umfasst, wobei die Filterungsstufe zwei Eingänge aufweist, wovon mit jedem zwei parallele Zweige verbunden sind, wovon einer eine Reihenschaltung aus einer ersten Induktivität und einem Widerstand enthält und der andere eine zweite Induktivität enthält, wobei ein Ausgangskondensator der Filterungsstufe zwischen den gemeinsamen Knoten mit den parallel geschalteten Zweigen verbunden ist, **dadurch gekennzeichnet, dass** eine erste Zustandsbeobachtungseinrichtung (38) verwendet wird, die ein Kalman-Filter verwendet, um die Zustandsvariablen zu bestimmen, wobei die Zustandsvariablen eine Ausgangsspannung ($V_F$) der Filterungsstufe (6) und einen Strom ($i_2$), der durch eine Induktivität der Filterungsstufe fließt, umfassen, eine zweite Beobachtungseinrichtung (40) verwendet wird, die ein Kalman-Filter verwendet, um eine erste Ableitung ($dV_R$ / dt) der Spannung ($V_R$) des Stromnetzes zu schätzen, das von der zweiten Beobachtungseinrichtung gelieferte Signal gefiltert wird, derart, dass die Wirkung von Unstetigkeiten der ersten Ableitung ($dV_R$ / dt) gedämpft werden, die erste Ableitung $( di_R^c\ /\ dt )$ und die zweite Ableitung

$(d^2 i_R^C / dt^2)$ eines Sollstroms $(i_R^C)$ des von dem Stromversorgungsnetz gelieferten Stroms ($i_R$) berechnet werden und wenigstens eine der Zustandsvariablen ($i_n$) durch Verarbeiten eines nichtlinearen Steuerungsgesetzes, das den Ladestrom ($i_n$) in Übereinstimmung mit einem Lade-Sollstrom regulieren kann und dabei den harmonischen Gehalt des von dem Netz gelieferten Stroms ($i_R$) auf seine Grundschwingung begrenzt, geregelt wird.

5. Ladeverfahren nach Anspruch 4, wobei ein virtueller Befehl $(V_F^*)$ der Ausgangsspannung ($V_F$) der Filterungsstufe (6) insbesondere anhand der Spannung ($V_R$) des Stromnetzes, des Sollstroms $(i_R^C)$ und seiner ersten Ableitung $(di_R^C / dt)$, des Stroms ($i_2$), der durch die Induktivität fließt, und des Stroms ($i_R$), der von dem Versorgungsnetz geliefert wird, bestimmt wird.

6. Ladeverfahren nach Anspruch 5, wobei das Tastverhältnis ($\alpha$) der Vorsteuerfunktion (u) der Spannungserniedrigungsstufe (18) anhand von Daten, die von den Beobachtungseinrichtungen geliefert werden, und des Folgerfehlers der Ausgangsspannung der Filterungsstufe (6) in Bezug auf den virtuellen Befehl verarbeitet wird.

7. Ladeverfahren nach Anspruch 6, wobei das Tastverhältnis ($\beta$) der Vorsteuerfunktion (z) der Spannungserhöhungsstufe (26) anhand der Daten, die von den Beobachtungseinrichtungen geliefert werden, und des Folgerfehlers der Ausgangsspannung der Filterungsstufe (6) in Bezug auf den virtuellen Befehl verarbeitet wird.

**Claims**

1. Device for charging an electrical storage battery (32) comprising a filtering stage (6), which is intended to be connected to an electrical network (4), a voltage buck stage (18), which is connected to the filtering stage (6), and a voltage boost stage (26), which is coupled to the voltage buck stage (18) and is intended to be connected to an electrical storage battery (32), said charging device (34) comprising a system (36) for controlling the voltage buck and boost stages (18, 26) of the charging device (34), said filtering stage including two inputs, to each of which there are connected two parallel branches, one of which includes a series assembly of a first inductor and a resistor, and the other one of which includes a second inductor, an output capacitor of the filtering stage being connected between the nodes common to the branches that are connected in parallel, **characterized in that** the control system (36) comprises:

   - a voltage and current measurement module (37),
   - a first observer (38), which is connected to said measurement module and uses a Kalman filter, for observing at least two state variables ($x_i$), said state variables comprising an output voltage ($V_F$) of the filtering stage (6) and a current ($i_2$) flowing through an inductor of said filtering stage, said observer being capable of transmitting the estimated state variables to a control generation module (43), and
   - a phase-locked loop (39), which is connected to said voltage and current measurement module, generating a sinusoidal signal that has the same frequency and phase as the first harmonic of the voltage of said electrical network ($V_R$) and is connected both to a second observer (40), which uses a Kalman filter and is capable of estimating a derivative of the voltage of said electrical network ($V_R$), the output of said second observer (40) being connected to a low-pass filter (41), an output of which is connected to said control generation module (43), and to a differentiator (42), which is capable of calculating the first derivative and the second derivative of a setpoint current of the electrical network, and the output of which is connected to said control generation module,

   said control generation module (43) being capable of generating the control functions (u, z) for controlling the voltage buck and boost stages so as to regulate the charging current ($i_n$) according to a charging current setpoint while limiting the harmonic content of the current ($i_R$) delivered by the network to its fundamental.

2. Device according to Claim 1, wherein said low-pass filter (41) connected to the second observer (40) is capable of attenuating the effects of the variations in the signal received from the second observer.

3. Device according to either one of Claims 1 and 2, wherein said control generation module (43) is capable of generating the control functions (u, z) for controlling the voltage buck and boost stages by determining duty cycles ($\alpha(t)$, $\beta(t)$)

of said functions on the basis of a model of the charging device using the data supplied by said observers.

4. Method for charging an electrical storage battery (32) using a charging device (34) comprising a filtering stage (6), which is connected to an electrical network (4), a voltage buck stage (18), which is connected to the filtering stage (6), and a voltage boost stage (26), which is coupled to the voltage buck stage (18) and is connected to the electrical storage battery (32), said filtering stage including two inputs, to each of which there are connected two parallel branches, one of which includes a series assembly of a first inductor and a resistor, and the other one of which includes a second inductor, an output capacitor of the filtering stage being connected between the nodes common to the branches that are connected in parallel, **characterized in that** a first state observer (38), which uses a Kalman filter, is used to determine state variables, said state variables comprising an output voltage ($V_F$) of the filtering stage (6) and a current ($i_2$) flowing through an inductor of said filtering stage, a second observer (40), which uses a Kalman filter, is used to estimate a first derivative $\left(\frac{dV_R}{dt}\right)$ of the voltage of said electrical network ($V_R$), the signal delivered by the second observer is filtered so as to attenuate the effect of the discontinuities of the first derivative $\left(\frac{dV_R}{dt}\right)$, first $\left(\frac{di_R^C}{dt}\right)$ and second $\left(\frac{d^2 i_R^C}{dt^2}\right)$ derivatives of a setpoint current $\left(i_R^C\right)$ for the current ($i_R$) delivered by the electrical power supply network are calculated, and at least one of the state variables ($i_n$) is controlled by generating a non-linear control law capable of regulating the charging current ($i_n$) according to a charging current setpoint while limiting the harmonic content of the current ($i_R$) delivered by the network to its fundamental.

5. Charging method according to Claim 4, wherein a virtual control $\left(V_F^*\right)$ for the output voltage ($V_F$) of the filtering stage (6) is determined in particular on the basis of the voltage of said electrical network ($V_R$), the setpoint current $\left(i_R^C\right)$ and the first derivative $\left(\frac{di_R^C}{dt}\right)$ thereof, the current ($i_2$) flowing through said inductor and the current ($i_R$) delivered by the power supply network.

6. Charging method according to Claim 5, wherein the duty cycle ($\alpha$) of the control function (u) for controlling the voltage buck stage (18) is generated on the basis of the data supplied by said observers and the tracking error of the output voltage of the filtering stage (6) relative to said virtual control.

7. Charging method according to Claim 6, wherein the duty cycle ($\beta$) of the control function (z) for controlling the voltage boost stage (26) is generated on the basis of the data supplied by said observers and the tracking error of the output voltage of the filtering stage (6) relative to said virtual control.

# FIG.1
## ART ANTERIEUR

## FIG.2

SYS

# FIG.3

# FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016016524 A
- WO 2012140374 A

- FR 2943188